# EUROPÄISCHE PATENTANMELDUNG

(11) **EP 1 841 020 A2**
(43) Veröffentlichungstag der Anmeldung: **03.10.2007**
(21) Anmeldenummer: 07004995.2
(22) Anmeldetag: 12.03.2007
(51) Int. Cl.: H01R 43/24, H01R 13/629

(54) **Pinschutz**

(30) Priorität: 31.03.2006 DE 10614951
(71) Anmelder: Hans Huonker GmbH, 78052 Villingen-Schwenningen (DE)
(72) Erfinder: Huonker, Hans-Georg, 78052 Villingen-Schwenningen (DE)
(74) Vertreter: Neymeyer, Franz

(57) **Zusammenfassung**

Die Erfindung betrifft ein Verfahren zur Herstellung einer Stützvorrichtung (1) sowie eine Stützvorrichtung (1) zum Schutz von elektrischen Kontaktstiften (8, 9, 10, 11, 12, 13), welche Teil eines aus elektrisch leitenden und mit Kunststoff teilweise umspritzten Bauteilen (15) eines Hybridbauteils (14) sind, wobei die Kontaktstifte (8, 9, 10, 11, 12, 13) in Gruppen einander benachbart angeordnet sind und über das Hybridbauteil (14) nach außen vorstehen. Um einen zusätzlichen Arbeitsschritt zum Anbringen einer Stützvorrichtung an den Kontaktstiften eines Hybridbauteils zu dessen Schutz entfallen lassen zu können, ist erfindungsgemäß vorgesehen, dass die Stützvorrichtung (1) während des Umspritzvorganges bei der Herstellung des Hybridbauteils (14) an die Kontaktstifte (8, 9, 10, 11, 12, 13) angespritzt wird. Um die Stützvorrichtung des Weiteren in einfacher Weise von den Kontaktstiften abnehmen zu können, weist die Stützvorrichtung nach dem Anspritzen mehrere Aufnahmenuten auf, von welchen jede einen Kontaktstift (8, 9, 10, 11, 12, 13) des Hybridbauteils (14) klemmend aufnimmt.

## Beschreibung

Die Erfindung betrifft eine Vorrichtung zum Schutz von elektrischen Kontaktstiften, welche Teil eines aus elektrisch leitenden und mit Kunststoff teilweise umspritzten Bauteilen eines Hybridbauteils sind, wobei die Kontaktstifte in Gruppen einander benachbart angeordnet sind und über das Hybridbauteil nach außen vorstehen.

Auf dem Gebiet der Elektrotechnik werden elektrische Steckverbindungen und die zugehörigen Stecker zunehmend als sogenannte Hybridbauteile gefertigt. Solche Hybridbauteile zeichnen sich dadurch aus, dass Leiterplatinen in einer Kavität einer Spritzgussmaschine teilweise oder vollständig mit Kunststoff umspritzt werden, so dass nach dem Spritzgussvorgang das fertige Bauteil vorliegt.

Hierbei werden zunächst die Kontaktelemente, beispielsweise in Form von flexiblen Leiterplatinen, starren Leiterplatinen oder auch nur als gestanztes Blechbauteil vorgefertigt, wobei diese Bauteile zum Anschluß an eine Steckbuchse bei einigen Ausführungsformen mehrere aus dem Kunststoffbauteil nach Fertigstellung nach außen vorstehende Kontaktstifte aufweisen.

Bei Steckverbindungen, wie sie beispielsweise in der Kfz-Technik eingesetzt werden, liegen in der Regel mehrere solcher Kontaktstifte parallel zueinander verlaufend nebeneinander. Aufgrund der größeren Länge, welche notwendig ist um einen sicheren Kontakt zu gewährleisten, sind diese Kontaktstifte insbesondere beim Transport gegen Beschädigung zu sichern.

Dazu ist es bekannt, eine Kunststoffkappe in einem separaten Spritzgussvorgang herzustellen und diese dann manuell auf die Kontaktstifte aufzustecken, so dass diese Kontaktstifte insbesondere gegen Verformung geschützt sind. Aus der US 6,755,672 B2 ist es beispielsweise bekannt, eine Schutzkappe auf ein die Kontaktstifte umgebendes Gehäuse aufzustecken, so dass diese danach gegen äußere Einflüsse geschützt sind. Diese Arten des Schutzes der Kontaktstifte beinhaltet somit einen zusätzlichen manuellen Herstellungsvorgang des Aufsteckens der Schutzkappe, was dementsprechend mit höheren Herstellkosten verbunden ist.

Weiter ist aus der DE 299 18 013 U1 eine Schutz- und Stützvorrichtung bekannt, welche zum Schutz der Kontaktstifte eine Art Abdeckung bildet, welche die Kontaktstifte in einer ersten Position abdeckt, so dass diese gegen äußere Einflüsse geschützt sind. In einer zweiten Position fungiert diese Vorrichtung als Stützvorrichtung, wobei in dieser zweiten Position die Kontaktstifte präzise ausgerichtet fixiert werden. Auch bei dieser Art des Schutzes der Kontaktstifte ist eine separate Herstellung der Abdeckung notwendig. Des Weiteren muss diese Abdeckung in einem separaten Arbeitsgang in ihre die Kontaktstifte schützende Position gebracht werden, was ebenfalls mit höheren Herstellungskosten verbunden ist.

Aus der US 6,390,834 B1 ist eine Stützvorrichtung für die Kontaktstifte einer Steckverbindung bekannt, welche aus einem separaten Bauteil besteht, das in seiner Stützposition im äußeren Endbereich der Kontaktstifte angeordnet ist. Die Kontaktstifte werden dabei stabilisierend von der Schutzvorrichtung in ihrer Sollposition fixiert. Auch hier ist somit ein separat herzustellendes und im Bereich der Kontaktstifte in einem zusätzlichen Arbeitsschritt anzubringendes Bauteil als Stütz- oder Schutzvorrichtung vorgesehen.

Der Erfindung liegt die Aufgabe zugrunde, ein Verfahren anzugeben, bei welchem ein zusätzlicher Arbeitsschritt zum Anbringen einer Stützvorrichtung an den Kontaktstiften eines Hybridbauteils zu dessen Schutz entfällt. Weiter liegt der Erfindung die Aufgabe zugrunde, eine Stützvorrichtung anzugeben, welche in einfacher Weise wieder von den Kontaktstiften abnehmbar ist.

Die Aufgabe wird bezüglich des Verfahrens nach Anspruch 1 dadurch gelöst, dass die Stützvorrichtung während des Umspritzvorganges bei der Herstellung des Hybridbauteils an die Kontaktstifte angespritzt wird.

Die Stützvorrichtung ist dabei gemäß Anspruch 2 derart ausgebildet, dass die Stützvorrichtung nach dem Anspritzen mehrere Aufnahmenuten aufweist, von welchen jede einen Kontaktstift des Hybridbauteils klemmend aufnimmt.

Durch dieses Verfahren und die Ausbildung der Stützvorrichtung ist ein manuelles Anbringen einer Schutzkappe nicht mehr notwendig. Im letzten Spritzgussvorgang bei der Herstellung des Hybridbauteiles, sprich beim Umspritzen der Leiterplatine, des gestanzten Blechbauteiles oder der flexiblen Leiterplatte, wird somit in einem Arbeitsgang die Stützvorrichtung zum Schutz der Kontaktstifte direkt an die Kontaktstifte angespritzt.

Dabei ist vorgesehen, dass die angespritzte Stützvorrichtung die Kontaktstifte nicht vollständig umschließt, so dass die Stützvorrichtung manuell in einfacher Weise wieder abgenommen werden kann, um eine Steckverbindung mit einer zugehörigen Steckbuchse herzustellen. Aufgrund des Anspritzens der Stützvorrichtung direkt an die Kontaktstifte und der Tatsache, dass beim Abkühlvorgang des angespritzten Kunststoffes dieser leicht schwindet, wird auch automatisch ein ausreichend festsitzender, klemmender Halt der Stützvorrichtung an den Kontaktstiften erreicht. Da die Kontaktstifte nun über die Stützvorrichtung gegenseitig miteinander verbunden sind, wird dadurch deren Stabilität gegen Verformung erheblich erhöht, so dass beim späteren Transport eine Beschädigung der einzelnen Kontaktstifte weitgehend ausgeschlossen ist.

Anhand der Zeichnung wird nachfolgend ein Ausführungsbeispiel der Erfindung näher erläutert. Es zeigt:
- Fig. 1: eine perspektivische Darstellung einer erfindungsgemäßen Stützvorrichtung, welche zur Verbindung von insgesamt sechs Kontaktstiften dient;
- Fig. 2: eine perspektivische Darstellung eines Teils eines Hybridbauteils mit insgesamt sechs nach außen vorstehenden Kontaktstiften, welche über die Stützvorrichtung aus Fig. 1 miteinander verbindbar sind;
- Fig. 3: eine Frontansicht III auf die Kontaktstifte aus Fig. 2 mit angebrachter Stützvorrichtung;
- Fig. 4: das Hybridbauteil aus Fig. 2 in komplett perspektivischer Ansicht mit angespritzter Stützvorrichtung an den Kontaktstiften der Darstellung aus Fig. 2 und 3.

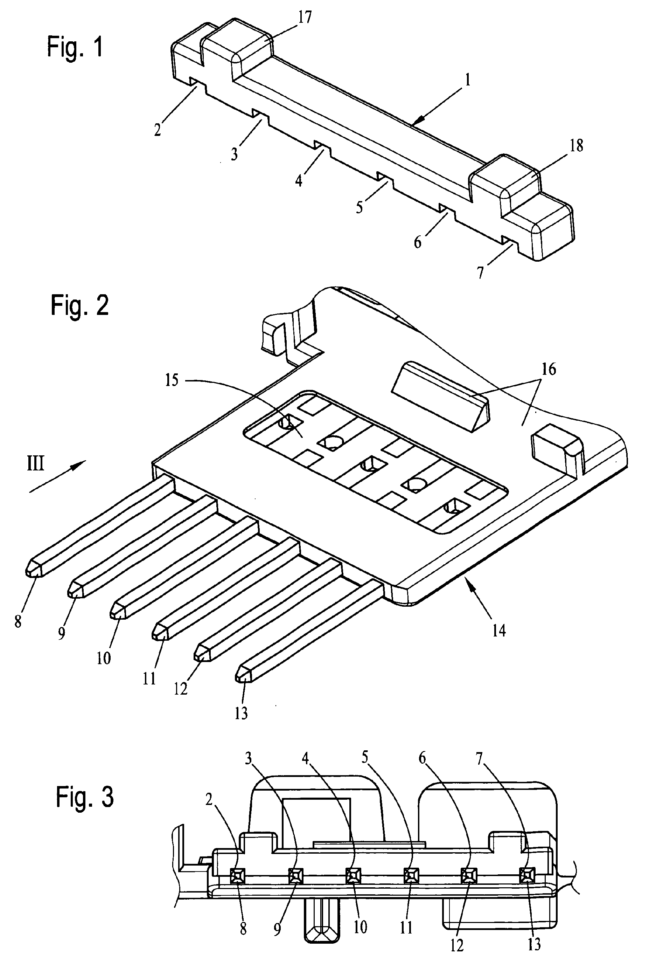

Fig. 1 zeigt eine perspektivische Darstellung einer erfindungsgemäßen Stützvorrichtung 1 als Einzelteil. Es ist erkennbar, dass diese Stützvorrichtung 1 unterseitig insgesamt sechs Aufnahmenuten 2, 3, 4, 5, 6 und 7 aufweist. Beim vorliegenden Ausführungsbeispiel ist die Stützvorrichtung 1 balkenartig ausgebildet und dient zur Fixierung von insgesamt sechs Kontaktstiften 8, 9, 10, 11, 12 und 13, wie diese aus der perspektivischen Teilansicht eines Hybridbauteils 14 aus Fig. 2 erkennbar sind.

Beim vorliegenden Ausführungsbeispiel des Hybridbauteiles 14 sind die Kontaktstifte 8 bis 13 Bestandteil eines Stanzgitters 15, welches nach dessen Herstellung in einer Spritzgußform mit einem Kunststoffkörper 16 bereichsweise in einer gewünschten Form umspritzt wird.

Wie aus Fig. 2 ersichtlich ist, ragen die Kontaktstifte 8 bis 13 aus diesem Kunststoffkörper 16 des Hybridbauteiles 14 nach außen vor, so dass beim Transport des Hybridbauteiles 14 oder bei dessen Handhabung die Gefahr einer Deformierung der Kontaktstifte 8 bis 13 besteht.

Die Stützvorrichtung 1 aus Fig. 1 ist derart ausgebildet, dass diese mit ihren Aufnahmenuten 2 bis 7 nach dem Anspritzen passend mit den Kontaktstiften 8 bis 13 zu deren Stabilisierung in Eingriff steht. Dabei ist erfindungsgemäß vorgesehen, dass die Stützvorrichtung 1 gleichzeitig beim Umspritzen des Stanzgitters 15 an den Kontaktstiften 8 bis 13 angespritzt wird. D.h., dass die Stützvorrichtung 1 während des Spritzgussvorganges gleichzeitig bei der Herstellung des Hybridbauteiles 14 hergestellt wird.

Aufgrund des Schwindens des Kunststoffes der Stützvorrichtung 1 während der Abkühlphase ergibt sich eine klemmende Halterung der Aufnahmenuten 2 bis 7 an den Kontaktstiften 8 bis 13, so dass die Stützvorrichtung 1 nach dem Spritzgießvorgang klemmend mit den Kontaktstiften 8 bis 13 verbunden ist. Dabei ist vorgesehen, dass die Aufnahmenuten 2 bis 7 beim vorliegenden Ausführungsbeispiel die Kontaktstifte 8 bis 13 etwa hälftig umschließen, wie dies in der Frontansicht der Fig. 3 erkennbar ist.

Oberseitig, den Aufnahmenuten 2 bis 7 gegenüberliegend, bildet die Stützvorrichtung 1 beim vorliegenden Ausführungsbeispiel zwei nach oben vorstehende Zapfen 17 und 18, welche zur Vereinfachung des Abnehmens der an den Kontaktstiften 8 bis 13 angespritzten Stützvorrichtung 1 dienen. Aufgrund der Tiefe der Aufnahmenuten 2 bis 7, welche etwa der halben Höhe der Kontaktstifte 8 bis 13 entspricht, entsteht eine klemmende Haltekraft der Stützvorrichtung 1 an den Kontaktstiften 8 bis 13, welche einerseits für den Transport einen ausreichend festsitzenden Halt der Stützvorrichtung 1 an den Kontaktstiften 8 bis 13 bewirkt und andererseits aber ein manuelles Abnehmen der Stützvorrichtung 1 von den Kontaktstiften 8 bis 13 erlaubt.

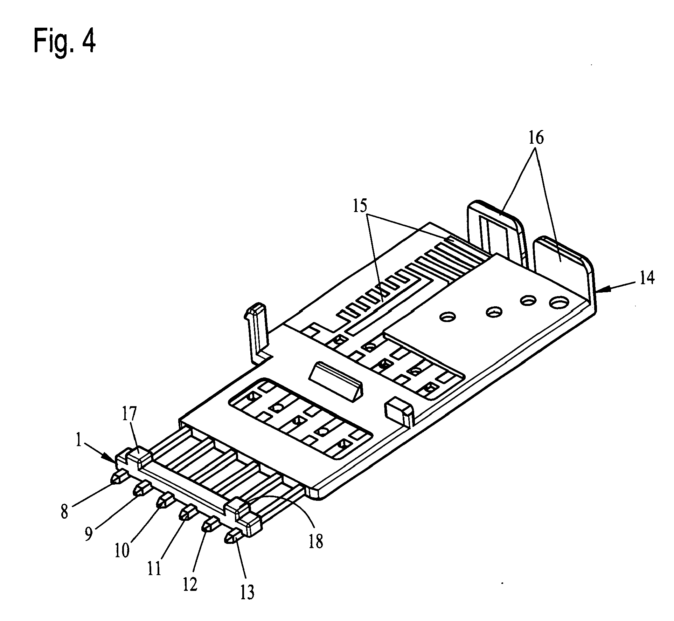

Fig. 4 zeigt das Hybridbauteil 14 in Komplettdarstellung. Es ist hier das Stanzgitter 15 erkennbar, welches mit dem Kunststoffkörper 16 teilweise umspritzt ist. Die Stützvorrichtung 1 mit ihren beiden nach oben stehenden Zapfen 17 und 18 ist an den Endbereichen der Kontaktstifte 8 bis 13 angespritzt und stabilisiert so diese Kontaktstifte 8 bis 13 in der gewünschten Art und Weise.

Somit ist erkennbar, dass durch die erfindungsgemäße Stützvorrichtung 1, welche im Spritzgussprozess direkt an die Kontaktstifte 8 bis 13 angespritzt ist, in äußerst einfacher Weise eine Abstützung der Kontaktstifte 8 bis 13 durch deren gegenseitige Fixierung über die Stützvorrichtung 1 erreicht wird. Damit wird eine Deformierung der Kontaktstifte 8 bis 13, insbesondere während des Transportes, verhindert, da sich die Kontaktstifte 8 bis 13 über die Stützvorrichtung 1 gegenseitig stabilisieren.

## Patentansprüche

1. Verfahren zur Herstellung einer Stützvorrichtung (1) zum Schutz von elektrischen Kontaktstiften (8, 9, 10, 11, 12, 13), welche Teil eines aus elektrisch leitenden und mit Kunststoff teilweise umspritzten Bauteilen (15) eines Hybridbauteils (14) sind, wobei die Kontaktstifte (8, 9, 10, 11, 12, 13) in Gruppen einander benachbart angeordnet sind und über das Hybridbauteil (14) nach außen vorstehen,
**dadurch gekennzeichnet,**
**dass** die Stützvorrichtung (1) während des Umspritzvorganges bei der Herstellung des Hybridbauteils (14) an die Kontaktstifte (8, 9, 10, 11, 12, 13) angespritzt wird.

2. Nach dem Verfahren nach Anspruch 1 hergestellte Stützvorrichtung,
**dadurch kennzeichnet,**
**dass** die Stützvorrichtung (1) nach dem Anspritzen mehrere Aufnahmenuten (2, 3, 4, 5, 6, 7) aufweist, von welchen jede einen Kontaktstift (8, 9, 10, 11, 12, 13) des Hybridbauteils (14) klemmend aufnimmt.

3. Stützvorrichtung nach Anspruch 2, **dadurch gekennzeichnet, dass** die Aufnahmenuten (2, 3, 4, 5, 6, 7) in ihrer jeweiligen Tiefe derart ausgebildet sind, dass die Kontaktstifte (8, 9, 10, 11, 12, 13) nach dem Anspritzen nur teilweise mit Kunststoff umschlossen sind.

4. Stützvorrichtung nach Anspruch 2 oder 3, **dadurch kennzeichnet, dass** an der Stützvorrichtung (1) ein oder mehrere Griffelemente in Form von Zapfen (17, 18) angespritzt sind, über welche die Stützvorrichtung (1) manuell von den Kontaktstiften (8, 9, 10, 11, 12, 13) abnehmbar ist.
